# EUROPEAN PATENT APPLICATION

(11) **EP 4 657 643 A1**
(43) Date of publication of application: **03.12.2025**
(21) Application number: 23945682.5
(22) Date of filing: 28.11.2023
(51) Int. Cl.: H01M 50/449, H01M 10/0525

(54) **SEPARATOR AND PREPARATION METHOD THEREFOR, SECONDARY BATTERY, AND ELECTRIC DEVICE**

(30) Priority: 19.07.2023 CN 202310889367
(71) Applicant: Contemporary Amperex Technology Co., Limited, Ningde, Fujian 352100 (CN)
(72) Inventor: LI, Quan, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN); HAN, Chongwang, Ningde, Fujian 352100 (CN)
(74) Representative: Kraus & Lederer PartGmbB
(86) International application number: PCT/CN2023/134841
(87) International publication number: WO 2025/015803

(57) **Abstract**

The present application relates to the technical field of secondary batteries and specifically provides a separator and a preparation method therefor, a secondary battery and an electric device. The separator includes a porous base film, where the porous base film includes a matrix phase and a filler phase distributed in the matrix phase; in a differential scanning calorimeter test curve of the porous base film, both a melting peak of the matrix phase and a melting peak of the filler phase are included, and a temperature of the melting peak of the matrix phase is higher than a temperature of the melting peak of the filler phase. The separator provided by the present application is capable of providing the reliability of secondary batteries.

## Description

The present application claims priority to Chinese Patent Application No. 2023108893672, filed on July 19, 2023, and entitled "SEPARATOR AND PREPARATION METHOD THEREFOR, SECONDARY BATTERY, AND ELECTRIC DEVICE", which is incorporated herein by reference in its entirety.

### TECHNICAL FIELD

The present application relates to the technical field of secondary batteries, and in particular, to a separator and a preparation method therefor, a secondary battery and an electric device.

### BACKGROUND

Secondary batteries are widely used in various consumer electronic products and electric vehicles due to their outstanding characteristics of being lightweight, non-polluting, and free from memory effects. With the continuous advancement of the new energy industry, users have increasingly higher demands for the reliability of secondary batteries. However, when the temperature of a secondary battery rises abnormally, the existing separators fail to meet the requirement of halting abnormal temperature situations.

### SUMMARY

In view of the technical problems in the background section, the present application provides a separator and a preparation method therefor, a secondary battery and an electric device, aiming to address the termination of abnormal temperature conditions in secondary batteries.

To address the above technical problems, the first technical solution adopted in the present application is as follows: A separator is provided, which includes a porous base film, where the porous base film includes a matrix phase and a filler phase distributed in the matrix phase; in a differential scanning calorimeter test curve of the porous base film, both a melting peak of the matrix phase and a melting peak of the filler phase are included, and a temperature of the melting peak of the matrix phase is higher than a temperature of the melting peak of the filler phase.

In the technical solution of the embodiments of the present application, the temperature of the melting peak of the matrix phase is higher than that of the filler phase, that is, the matrix phase exhibits better thermal stability compared to the filler phase. Therefore, when the internal temperature of the secondary battery is relatively high, the filler phase melts first due to poorer thermal stability, thereby closing the pores of the separator in a timely manner, terminating the electrochemical reaction, and preventing the internal temperature of the secondary battery from continuing to rise. As a result, the reliability of the secondary battery is improved.

In any embodiment of the present application, a ratio of a peak area of the melting peak of the matrix phase to a peak area of the melting peak of the filler phase is greater than 1, optionally 1.2 to 2.0.

In the technical solution of the embodiments of the present application, the ratio of the peak area of the melting peak of the matrix phase to the peak area of the melting peak of the filler phase within the above range ensures the formation of a sufficient amount of filler phase crystals in the separator, which facilitates the realization of the pore-closing performance. Additionally, it ensures that the finished separator exhibits good pore-forming performance and high strength.

In any embodiment of the present application, in an X-ray diffraction pattern of the porous base film, the porous base film exhibits a diffraction peak within a range of 15° <2θ < 17°.

In the technical solution of the embodiments of the present application, the porous base film exhibits a diffraction peak within the range of 15° < 2θ < 17°. This diffraction peak corresponds to the β-crystal form diffraction peak in the porous base film. The higher the β-crystal form content in the porous base film, the greater the overall strength of the porous base film.

In any embodiment of the present application, in an X-ray diffraction pattern of the porous base film, the porous base film exhibits a diffraction peak within a range of 23° < 2θ < 25°.

In the technical solution of the embodiments of the present application, the porous base film exhibits a diffraction peak within the range of 23° < 2θ < 25°. This diffraction peak corresponds to the α-crystal form diffraction peak in the porous base film. The α-crystal form in the porous base film facilitates the realization of the thermal pore-closing function.

In any embodiment of the present application, in the X-ray diffraction pattern of the porous base film, the porous base film includes a first diffraction peak within the range of 15° < 2θ < 17° and a second diffraction peak within the range of 23° < 2θ < 25°, and a diffraction peak intensity of the first diffraction peak is greater than a diffraction peak intensity of the second diffraction peak.

In the technical solution of the embodiments of the present application, the porous base film includes a first diffraction peak within the range of 15° < 2θ < 17° and a second diffraction peak within the range of 23° < 2θ < 25°. The diffraction peak intensity of the first diffraction peak is greater than that of the second diffraction peak, and the intensity of the first diffraction peak being greater than that of the second diffraction peak indicates that the proportion of the β-crystal form content is higher than that of the α-crystal form content. Therefore, while ensuring a large overall strength of the separator, the thermal pore-closing function of the separator can be realized, thereby improving the reliability of the separator.

In any embodiment of the present application, the filler phase includes α-crystal form grains, and the matrix phase includes β-crystal form grains.

In the technical solution of the embodiments of the present application, the filler phase of the separator includes α-crystal form grains, while the matrix phase includes β-crystal form grains. As a result, while ensuring a large overall strength of the separator, the thermal pore-closing function of the separator can be realized, thereby improving the reliability of the separator.

In any embodiment of the present application, a grain size of the filler phase is 0.1 µm to 2 µm, optionally 0.1 µm to 0.5 µm.

In the technical solution of the embodiments of the present application, the grain size of the filler phase is controlled within the above range. When the internal temperature of the secondary battery is relatively high, the filler phase melts first due to a low melting point, thereby closing the pores of the separator in a timely manner. This achieves rapid shutdown, terminates the electrochemical reaction, and prevents the internal temperature of the secondary battery from continuing to rise. Meanwhile, this enables the separator to exhibit better strength and elongation at break, improving the reliability of the secondary battery.

In any embodiment of the present application, a mass fraction of the filler phase in a substrate is 10% to 40%, optionally 15% to 25%.

In the technical solution of the embodiments of the present application, the mass fraction of the filler phase is controlled within the above range. When the internal temperature of the secondary battery is relatively high, a sufficient amount of the filler phase melts and closes the pores of the separator, achieving thermal shutdown. Meanwhile, the matrix phase and the filler phase can balance the physical strength of the separator, thereby improving the reliability of the secondary battery.

In any embodiment of the present application, a relative molecular mass of a material of the filler phase is less than or equal to 1,200,000, optionally 400,000 to 600,000; a relative molecular mass of a material of the matrix phase is greater than or equal to 300,000, optionally 300,000 to 2,500,000.

In the technical solution of the embodiments of the present application, the relative molecular mass of the filler phase and the matrix phase is limited within the above range. The matrix phase and the filler phase can balance the physical strength of the separator, thereby improving the reliability of the secondary battery.

In any embodiment of the present application, the temperature of the melting peak of the matrix phase is 160 °C to 350 °C, optionally 160 °C to 180 °C; the temperature of the melting peak of the filler phase is 60 °C to 180 °C, optionally 80 °C to 130 °C.

In the technical solution of the embodiments of the present application, the temperature of the melting peak of the matrix phase and the temperature of the melting peak of the filler phase are limited within the above range. This allows for balancing the physical strength of the separator while ensuring that, when the internal temperature of the secondary battery is relatively high, the pores of the separator are closed in a timely manner, thereby improving the reliability of the secondary battery.

In any embodiment of the present application, the material of the matrix phase includes at least one of polypropylene, polytetrafluoroethylene, polyvinylidene fluoride, polyethylene terephthalate, polyetheretherketone, polyurethane, and polyester; the material of the filler phase includes at least one of polyethylene and polypropylene.

In the technical solution of the embodiments of the present application, the materials of the matrix phase and the filler phase are limited within the above range, which can meet the material requirements for the separator. When the internal temperature of the secondary battery is relatively high, the filler phase therein can close the pores of the separator in a timely manner, thereby improving the reliability of the secondary battery.

In any embodiment of the present application, a pore size of the porous base film is less than or equal to 0.5 µm, optionally 0.02 µm to 0.1 µm.

In the technical solution of the embodiments of the present application, the pore size of the porous base film is less than or equal to 0.5 µm, which enables the filler phase to effectively seal the pores after melting, thus achieving thermal shutdown and improving the reliability of the secondary battery.

In any embodiment of the present application, the separator satisfies at least one of the following (1) to (9):
(1) a pore-closing temperature of the separator is 120 °C to 170 °C, optionally 120 °C to 130 °C;
(2) a pore-closing time of the separator is less than or equal to 10 s, optionally 5 s to 10 s;
(3) a transverse direction elongation at break of the separator is ≥ 100%, optionally 100% to 120%;
(4) a machine direction elongation at break of the separator is ≥ 60%, optionally 60% to 80%;
(5) a transverse direction tensile strength of the separator is ≥ 1500 kgf/cm², optionally 2000 kgf/cm² to 4000 kgf/cm²;
(6) a machine direction tensile strength of the separator is ≥ 2000 kgf/cm², optionally 2000 kgf/cm² to 4000 kgf/cm²;
(7) a puncture strength of the separator is ≥ 60 gf, optionally 120 gf to 420 gf;
(8) a porosity of the separator is 30% to 90%, optionally 30% to 50%; and
(9) an air permeability of the separator is less than or equal to 300 sec/100 cc, optionally 100 sec/100 cc to 300 sec/100 cc.

In the technical solution of the embodiments of the present application, the separator satisfies at least one of the above conditions,
which can effectively enhance the ductility of the separator, improve the puncture resistance of the separator, and quickly respond to thermal anomalies to achieve thermal shutdown, thereby further improving the reliability of the secondary battery.

The second technical solution adopted in the present application is as follows: A method for preparing the separator as described above is provided. The preparation method includes: mixing a raw material for forming a matrix phase, a raw material for forming a filler phase, and a nucleating agent to form a precursor, where a crystallization temperature of the raw material for forming the filler phase is lower than a crystallization temperature of the raw material for forming the matrix phase; extruding the precursor to form a first intermediate product; subjecting the first intermediate product to a film casting treatment to form a second intermediate product, where the film casting treatment includes a first temperature stage and a second temperature stage, and a film casting temperature in the first temperature stage is higher than a film casting temperature in the second temperature stage; and subjecting the second intermediate product to a stretching treatment to obtain a porous base film. The porous base film includes a matrix phase and a filler phase distributed in the matrix phase; in a differential scanning calorimeter test curve of the porous base film, both a melting peak of the matrix phase and a melting peak of the filler phase are included, and a temperature of the melting peak of the matrix phase is higher than a temperature of the melting peak of the filler phase.

In the technical solution of the embodiments of the present application, the raw material for forming the matrix phase, the raw material for forming the filler phase, and the nucleating agent are mixed. The crystallization temperature of the raw material of the filler phase is lower than the crystallization temperature of the raw material for forming the matrix phase. During the film casting treatment, a film casting process is adopted where the film casting temperature in the first temperature stage is higher than that in the second temperature stage, enabling the raw material of the matrix phase to crystallize first and the raw material of the filler phase to crystallize later. The filler phase is dispersed in the matrix phase, and a porous separator is formed through subsequent stretching treatment. The temperature of the melting peak of the matrix phase is higher than that of the filler phase, and the matrix phase exhibits better thermal stability compared to the filler phase. Therefore, when the internal temperature of the secondary battery is relatively high, the filler phase melts first due to poorer thermal stability, thereby closing the pores of the separator in a timely manner, terminating the electrochemical reaction, and preventing the internal temperature of the secondary battery from continuing to rise. As a result, the reliability of the secondary battery is improved.

In any embodiment of the present application, a melt index of the raw material of the filler phase is greater than a melt index of the raw material of the matrix phase; optionally, a ratio of the melt index of the raw material of the filler phase to the melt index of the raw material of the matrix phase is 1.1 to 10.1, optionally 1.1 to 2.1.

In the technical solution of the embodiments of the present application, the melt index of the raw material of the filler phase is greater than that of the raw material of the matrix phase, and the ratio between the two is limited within the above range. The matrix phase exhibits better thermal stability compared to the filler phase. When the internal temperature of the secondary battery is relatively high, the filler phase melts first, thereby closing the pores of the separator in a timely manner, terminating the electrochemical reaction, and preventing the internal temperature of the secondary battery from continuing to rise. As a result, the reliability of the secondary battery is improved.

In any embodiment of the present application, the crystallization temperature of the raw material of the filler phase is 80 °C to 120 °C, optionally 80 °C to 100 °C; and/or the crystallization temperature of the raw material of the matrix phase is 125 °C to 135 °C, optionally 125 °C to 130 °C.

In the technical solution of the embodiments of the present application, the crystallization temperature of the raw material of the filler phase and the crystallization temperature of the raw material of the matrix phase are limited within the above range, ensuring that the temperature of the melting peak of the matrix phase is higher than that of the filler phase. When the internal temperature of the secondary battery is relatively high, the filler phase melts first, thereby closing the pores of the separator in a timely manner, terminating the electrochemical reaction, and preventing the internal temperature of the secondary battery from continuing to rise. As a result, the reliability of the secondary battery is improved.

In any embodiment of the present application, the film casting temperature in the first temperature stage is 125 °C to 135 °C, optionally 125 °C to 130 °C; and/or the film casting temperature in the second temperature stage is 105 °C to 125 °C, optionally 105 °C to 110 °C; and/or a difference between the film casting temperature in the first temperature stage and the film casting temperature in the second temperature stage is 10 °C to 20 °C.

In the technical solution of the embodiments of the present application, the film casting temperature is limited within the above range, allowing the separator to crystallize sufficiently to form the filler phase and the matrix phase.

In any embodiment of the present application, in the step of subjecting the second intermediate product to the stretching treatment, a transverse direction stretching temperature is 110 °C to 120 °C, optionally 110 °C to 115 °C; and/or a machine direction stretching temperature is 85 °C to 120 °C, optionally 110 °C to 120 °C.

In the technical solution of the embodiments of the present application, the transverse direction stretching temperature and the machine direction stretching temperature are limited within the above range, enabling the resulting separator to exhibit better physical and chemical properties.

The third technical solution adopted in the present application is as follows: A secondary battery is provided, which includes the separator as described above or a separator prepared by the method for preparing the separator as described above. The secondary battery includes a positive electrode plate and a negative electrode plate, and the separator is disposed between the positive electrode plate and the negative electrode plate.

The fourth technical solution adopted in the present application is as follows: An electric device is provided, which includes the secondary battery as described above.

In the technical solution of the embodiments of the present application, the electric device includes the above-mentioned secondary battery, thereby having the same advantage of excellent fast-charging performance.

The above description is merely an overview of the technical solutions of the present application. To gain a clearer understanding of the technical means of the present application to enable implementation in accordance with the content of the specification and to make the above and other purposes, features, and advantages of the present application more obvious and easy to understand, specific embodiments of the present application are provided below.

### BRIEF DESCRIPTION OF THE DRAWINGS

In order to more clearly illustrate the technical solutions of the present application, the drawings used in the present application will be briefly described below. Apparently, the drawings in the following description illustrate merely some embodiments of the present application, and those of ordinary skills in the art may still derive other drawings from these drawings without creative efforts.
FIG. 1 is an SEM image of one embodiment of a separator according to the present application.
FIG. 2 is a melting curve graph of the separator shown in FIG. 1.
FIG. 3 is a schematic diagram of one embodiment of a secondary battery according to the present application.
FIG. 4 is an exploded view of FIG. 3.
FIG. 5 is a schematic diagram of one embodiment of a battery module according to the present application.
FIG. 6 is a schematic diagram of one embodiment of a battery pack according to the present application.
FIG. 7 is an exploded view of FIG. 6.
FIG. 8 is a schematic diagram of one embodiment of a device using a secondary battery as a power source according to the present application.

### DETAILED DESCRIPTION

The present application will be further elaborated with reference to the specific embodiments below. It should be understood that these specific embodiments are merely intended to illustrate the present application and not to limit the scope of the present application.

For simplicity, only certain numerical ranges are specifically disclosed herein. However, any lower limit may be combined with any upper limit to form an undisclosed range; likewise, any lower limit may be combined with other lower limits to form an undisclosed range, and similarly, any upper limit may be combined with any other upper limits to form an undisclosed range. In addition, each individually disclosed point or single value may itself serve as a lower limit or upper limit, combining with any other points or single values, or combining with other lower or upper limits to form an undisclosed range.

In the description herein, unless otherwise stated, the term "or" is inclusive. That is, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

In the description herein, it should be noted that unless otherwise stated, "above" and "below" are inclusive of the mentioned number, and the meaning of "more" in "one or more" refers to two or more.

Unless otherwise specified, the terms used in the present application have well-known meanings that are commonly understood by those skilled in the art. Unless otherwise stated, the numerical values of the parameters mentioned in the present application may be measured using various measurement methods commonly used in the art (for example, testing may be conducted according to the methods provided in the embodiments of the present application).

### [Secondary Battery]

A secondary battery refers to a battery that, after discharge, can be reused by reactivating the active materials through charging. Typically, a secondary battery includes a battery cell (positive electrode plate, negative electrode plate, separator), electrolytic solution, and housing. During the charging and discharging process of the battery, active ions are intercalated and deintercalated back and forth between the positive electrode plate and the negative electrode plate. The separator is provided between the positive electrode plate and the negative electrode plate for isolation. The electrolytic solution conducts ions between the positive electrode plate and the negative electrode plate.

### [Separator]

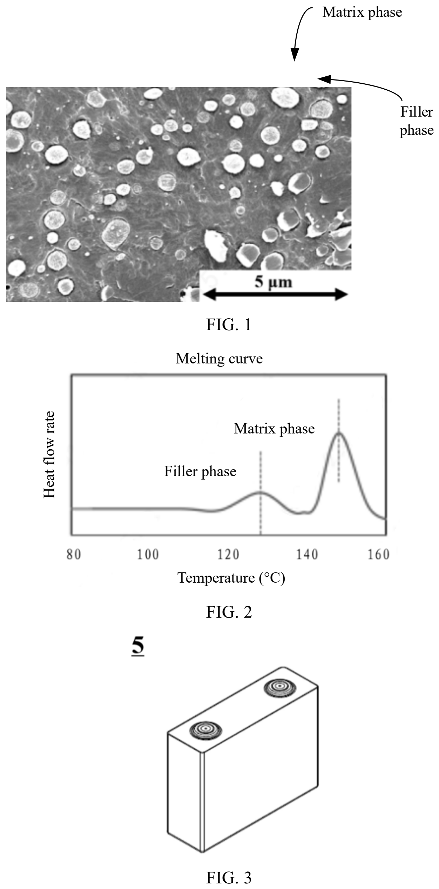

As shown in FIGS. 1 and 2, FIG. 1 is an SEM image of one embodiment of a separator, and FIG. 2 is a melting curve graph of the separator shown in FIG. 1. The separator provided according to the embodiments of the present application includes a porous base film. The porous base film includes a matrix phase and a filler phase dispersed in the matrix phase. In the differential scanning calorimeter test curve of the porous base film, both the melting peak of the matrix phase and the melting peak of the filler phase are included, and the temperature of the melting peak of the matrix phase is higher than that of the filler phase.

A differential scanning calorimeter (DSC) can be used to measure the curing reaction temperature and thermal effects of polymer materials, the phase transition temperature of substances and thermal effects thereof, the crystallization and melting temperature of polymer materials and thermal effects thereof, the glass transition temperature of polymer materials, and the like. The melting peak reflects the melting process of a substance, i.e., the process of a solid substance melting into a liquid substance as the temperature rises to a certain level, accompanied by the release of a certain amount of heat. The temperature of the melting peak can be used to evaluate the thermal stability of a material. Thermal stability refers to the stability performance of a material at high temperatures. If the temperature at the melting peak of a material is relatively high, it indicates that the material is less prone to melting at high temperatures and exhibits better thermal stability. If the temperature at the melting peak is relatively low, it indicates that the material is prone to melting at high temperatures and exhibits poorer thermal stability. In other words, the temperature of the melting peak may also be understood as the melting point. That is, the melting point of the matrix phase is higher than that of the filler phase. In the embodiments of the present application, the temperature of the melting peak of the matrix phase is higher than that of the filler phase, that is, the matrix phase exhibits better thermal stability compared to the filler phase. Therefore, when the internal temperature of the secondary battery is relatively high, the filler phase melts first due to poorer thermal stability. This then closes the pores of the separator in a timely manner, thereby stopping the electrochemical reaction and preventing the internal temperature of the secondary battery from continuing to rise. As a result, the reliability of the secondary battery is improved.

In some embodiments, the ratio of the peak area of the melting peak of the matrix phase to the peak area of the melting peak of the filler phase is greater than 1, optionally 1.2 to 2.0. For example, the ratio of the peak area of the melting peak of the matrix phase to the peak area of the melting peak of the filler phase may be 1, 1.1, 1.2, 1.3, 1.4, 1.6, 1.8, 2.0, 2.2, 2.5, 2.8, 3.2, or 4, or fall within a range formed by any two of the above values, such as 1 to 1.2, 1.1 to 1.4, 1.3 to 1.8, 1.6 to 2.2, 2.2 to 2.8, or 2.8 to 4. The melting peak area in the X-ray diffraction pattern represents the crystal content; the larger the area, the higher the crystalline phase content. The peak area ratio represents the proportion of different crystals in the separator. When the ratio of the peak area of the melting peak of the matrix phase to the peak area of the melting peak of the filler phase falls within the above range, it ensures the formation of a sufficient amount of filler phase crystals in the separator, which is conducive to achieving pore-blocking performance. Additionally, this ensures that the finished separator exhibits not only good pore-forming performance but also high strength.

In some embodiments, the porous base film exhibits a diffraction peak within the range of 15° < 2θ < 17° in the X-ray diffraction pattern of the porous base film. When X-rays irradiate crystals, a physical phenomenon known as coherent scattering occurs, which is referred to as diffraction. The diffraction angle of light refers to the angle formed by the change in the light path when light undergoes diffraction. For example, in an X-ray diffractometer, 2θ is used as the diffraction angle, and 2θ represents the angle at which the direction of X-rays changes after diffraction. The diffraction peak of the porous base film within the range of 15° < 2θ < 17° corresponds to the diffraction peak of the β-crystal form; the β-crystal form is the crystallization of the matrix phase. The β-crystal form refers to a type of crystal structure of a substance in the solid state. The β-crystal form refers to the face-centered cubic crystal system and belongs to the hexagonal crystal system. The higher the β-crystal form content, the higher the overall strength of the porous base film. The porous base film exhibits a diffraction peak within the range of 15° < 2θ < 17°, which enables the separator to have sufficient strength.

In some embodiments, in the X-ray diffraction pattern of the porous base film, the porous base film exhibits a diffraction peak within a range of 23° < 2θ < 25°. The diffraction peak of the porous base film within the range of 23° < 2θ < 25° corresponds to the diffraction peak of the α-crystal form; the α-crystal form is the crystallization of the filler phase. The α-crystal form refers to another type of crystal structure of a substance in the solid state. Generally, the α-crystal form refers to the body-centered cubic crystal system and belongs to the monoclinic crystal system. The higher the α-crystal form content, the more beneficial it is for the filler phase crystallization to achieve the thermal pore-closing function of the separator. The porous base film exhibits a diffraction peak within the range of 23° < 2θ < 25°, which facilitates the realization of the thermal pore-closing function of the separator.

In some embodiments, in the X-ray diffraction pattern of the porous base film, the porous base film includes a first diffraction peak within the range of 15° < 2θ < 17° and a second diffraction peak within the range of 23° < 2θ < 25°; the diffraction peak intensity of the first diffraction peak is greater than that of the second diffraction peak. The intensity of the diffraction peaks depends on properties such as the types, content, and relative positions of the atoms. The position and intensity of the diffraction peak can reflect the characteristics of the crystal structure, thus serving as a basis for identifying phases. The diffraction line intensity for each phase increases with the increase in its phase content. As described above, the diffraction peak of the porous base film within the range of 15° < 2θ < 17° is the diffraction peak of the β-crystal form, and the higher the β-crystal form content, the greater the overall strength of the porous base film. The diffraction peak of the porous base film within the range of 23° < 2θ < 25° corresponds to the diffraction peak of the α-crystal form; the α-crystal form is the crystallization of the filler phase, which is beneficial for the filler phase crystallization to achieve the thermal pore-closing function of the separator. The porous base film includes a first diffraction peak within the range of 15° < 2θ < 17° and a second diffraction peak within the range of 23° < 2θ < 25°; the diffraction peak intensity of the first diffraction peak is greater than that of the second diffraction peak. This indicates that the content of the β-crystal form in the matrix phase is higher than the content of the α-crystal form in the filler phase. Consequently, the separator can achieve the thermal pore-closing function while maintaining a high overall strength, thereby improving the reliability of the separator.

In some embodiments, the filler phase includes α-crystal form grains, and the matrix phase includes β-crystal form grains. As described above, the higher the α-crystal form content, the more beneficial it is for the filler phase crystallization to achieve the thermal pore-closing function of the separator. The higher the β-crystal form content, the higher the overall strength of the porous base film. Therefore, the filler phase includes α-crystal form grains, and the matrix phase includes β-crystal form grains, enabling the separator to achieve the thermal pore-closing function while maintaining a high overall strength, thereby improving the reliability of the separator.

In some embodiments, the grain size of the filler phase is 0.1 µm to 2 µm, optionally 0.1 µm to 0.5 µm. For example, the grain size may be 0.1 µm, 0.15 µm, 0.25 µm, 0.3 µm, 0.4 µm, 0.5 µm, 0.7 µm, 0.9 µm, 1.2 µm, 1.4 µm, 1.7 µm, 2 µm, etc., or fall within a range formed by any two of the above values, such as 0.1 µm to 0.15 µm, 0.15 µm to 0.3 µm, 0.25 µm to 0.4 µm, 0.4 µm to 0.5 µm, 0.5 µm to 0.9 µm, 0.7 µm to 1.4 µm, or 1.4 µm to 2 µm. Generally, the larger the grain size of polymer crystallization, the higher the melting point. Therefore, by controlling the grain size of the filler phase within the above ranges, the melting point of the filler phase can be controlled. When the internal temperature of the secondary battery is relatively high, the filler phase melts first due to its low melting point, achieving rapid shutdown, terminating the electrochemical reaction, and preventing the internal temperature of the secondary battery from continuing to rise. Meanwhile, the separator is provided with relatively good strength and elongation at break, thereby improving the reliability of the secondary battery.

In some embodiments, the mass fraction of the filler phase in the substrate is 10% to 40%, optionally 15% to 25%. For example, the mass fraction of the filler phase in the substrate may be 10%, 12%, 15%, 18%, 20%, 22%, 24%, 25%, 28%, 30%, 35%, 38%, 40%, etc., or fall within a range formed by any two of the above values, such as 10% to 15%, 12% to 18%, 15% to 22%, 18% to 25%, 25% to 30%, 35% to 38%, or 38% to 40%. If the mass fraction of the filler phase is too low, when the internal temperature of the secondary battery is relatively high, the amount of melted filler phase is small and will not be sufficient to close the pores of the separator. If the mass fraction of the filler phase is too high, the physical strength of the separator cannot be maintained. Therefore, by controlling the mass fraction of the filler phase within the above ranges, when the internal temperature of the secondary battery is relatively high, a sufficient amount of the filler phase melts to close the pores of the separator, thereby achieving thermal shutdown. Meanwhile, the physical strength of the separator can be balanced between the matrix phase and the filler phase, thereby improving the reliability of the secondary battery.

In some embodiments, the relative molecular mass of the material of the filler phase is less than or equal to 1,200,000, optionally 400,000 to 600,000; the relative molecular mass of the material of the matrix phase is greater than or equal to 300,000, optionally 300,000 to 2,500,000. The relative molecular mass of the material of the filler phase may be 200,000, 300,000, 400,000, 450,000, 480,000, 500,000, 550,000, 600,000, 700,000, 800,000, 900,000, 1,000,000, 1,100,000, 1,200,000, etc., or fall within a range formed by any two of the above values, such as 200,000 to 300,000, 300,000 to 450,000, 450,000 to 500,000, 500,000 to 600,000, 600,000 to 800,000, 800,000 to 1,000,000, or 1,000,000 to 1,200,000. The relative molecular mass of the material of the matrix phase may be 300,000, 500,000, 600,000, 750,000, 860,000, 1,000,000, 1,200,000, 1,400,000, 1,650,000, 1,900,000, 2,200,000, 2,500,000, 3,000,000, 4,000,000, etc., or fall within a range formed by any two of the above values, such as 300,000 to 600,000, 500,000 to 750,000, 600,000 to 1,000,000, 860,000 to 1,400,000, 1,200,000 to 1,900,000, 1,650,000 to 2,200,000, 1,900,000 to 2,500,000, or 2,500,000 to 4,000,000.

The relative molecular mass of the separator has a meaning well known in the art and can be tested using equipment and methods known in the art. For example, the testing is carried out by using a high temperature GPC test (differential refractometer).

The filler phase with a smaller relative molecular mass has stronger crystallization ability and is more easily stabilized and dispersed in the matrix phase with a larger relative molecular mass. This reduces the sensitivity of the filler phase to high-temperature exposure. That is, after the filler phase heats up, it takes some time to conduct the heat to the interior of the matrix phase. The matrix phase with a larger relative molecular mass exhibits greater heat resistance and slower heat transfer, thus requiring a higher temperature (i.e., the pore-closing temperature) to enable the filler phase to melt and close the pores. The pore-closing temperature refers to the temperature at which the pores in the separator are sealed. The filler phase with a smaller relative molecular mass can result in a higher pore-closing temperature for the separator. In other words, when the temperature of the secondary battery abnormally rises to a certain level, the filler phase with a smaller relative molecular mass melts, thereby closing the pores of the separator. By limiting the relative molecular masses of the filler phase and the matrix phase within the above ranges, the matrix phase and the filler phase can balance the physical strength of the separator, thereby improving the reliability of the secondary battery.

In some embodiments, the temperature of the melting peak of the matrix phase is 160 °C to 350 °C, optionally 160 °C to 180 °C; the temperature of the melting peak of the filler phase is 60 °C to 180 °C, optionally 80 °C to 130 °C. The temperature of the melting peak of the matrix phase may be 160 °C, 165 °C, 170 °C, 175 °C, 180 °C, 200 °C, 250 °C, 300 °C, 350 °C, etc., or fall within a range formed by any two of the above values, such as 160 °C to 170 °C, 170 °C to 175 °C, 175 °C to 200 °C, 200 °C to 300 °C, or 250 °C to 350 °C. The temperature of the melting peak of the filler phase may be 60 °C, 65 °C, 70 °C, 75 °C, 80 °C, 100 °C, 110 °C, 120 °C, 140 °C, 160 °C, 180 °C, etc., or fall within a range formed by any two of the above values, such as 60 °C to 70 °C, 70 °C to 80 °C, 75 °C to 110 °C, 100 °C to 140 °C, 120 °C to 160 °C, or 140 °C to 180 °C. By limiting the temperature of the melting peak of the matrix phase and the temperature of the melting peak of the filler phase within the above ranges, the physical strength of the separator can be balanced, while the pores of the separator can be closed in a timely manner when the internal temperature of the secondary battery is relatively high, thereby improving the reliability of the secondary battery.

In some embodiments, the material of the matrix phase includes at least one of polypropylene, polytetrafluoroethylene, polyvinylidene fluoride, polyethylene terephthalate, polyetheretherketone, polyurethane, and polyester; the material of the filler phase includes at least one of polyethylene and polypropylene. For example, in some embodiments, the material of the matrix phase includes polytetrafluoroethylene, and the material of the filler phase includes polyethylene. The porous base film includes a first diffraction peak and a second diffraction peak within the range of 15° < 2θ < 17°; the first diffraction peak corresponds to polytetrafluoroethylene, and the second diffraction peak corresponds to polyethylene. The diffraction peak intensity of the first diffraction peak is greater than that of the second diffraction peak. For example, in some embodiments, the material of the matrix phase includes polypropylene, and the material of the filler phase includes polyethylene. The porous base film includes a first diffraction peak within the range of 15° < 2θ < 17° and a second diffraction peak within the range of 23° < 2θ < 25°; the first diffraction peak corresponds to polypropylene, and the second diffraction peak corresponds to polyethylene. The diffraction peak intensity of the first diffraction peak is greater than that of the second diffraction peak. By limiting the materials of the matrix phase and filler phase within the above ranges, the material requirements for the separator can be met. When the internal temperature of the secondary battery is relatively high, the filler phase therein can close the pores of the separator in a timely manner, thereby improving the reliability of the secondary battery.

In some embodiments, the pore size of the porous base film is less than or equal to 0.5 µm, optionally 0.02 µm to 0.1 µm. For example, the pore size of the porous base film may be 0.01 µm, 0.02 µm, 0.04 µm, 0.06 µm, 0.08 µm, 0.1 µm, 0.2 µm, 0.3 µm, 0.35 µm, 0.4 µm, 0.5 µm, etc., or fall within a range formed by any two of the above values, such as 0.01 µm to 0.04 µm, 0.02 µm to 0.06 µm, 0.04 µm to 0.1 µm, 0.08 µm to 0.3 µm, 0.1 µm to 0.35 µm, or 0.3 µm to 0.5 µm. If the pore size of the porous base film is too large, it is prone to pore blockage when active substance particles pass through. When the pore size of the porous base film is less than or equal to 0.5 µm, it enables the filler phase to effectively block the pores after melting, achieving thermal shutdown and improving the reliability of the secondary battery.

In some embodiments, the separator satisfies at least one of the following (1) to (9):
(1) the pore-closing temperature of the separator is 120 °C to 170 °C, optionally 120 °C to 130 °C;
(2) the pore-closing time of the separator is less than or equal to 10 s, optionally 5 s to 10 s;
(3) the transverse direction elongation at break of the separator is ≥ 100%, optionally 100% to 120%;
(4) the machine direction elongation at break of the separator is ≥ 60%, optionally 60% to 80%;
(5) the transverse direction tensile strength of the separator is ≥ 1500 kgf/cm², optionally 2000 kgf/cm² to 4000 kgf/cm²;
(6) the machine direction tensile strength of the separator is ≥ 2000 kgf/cm², optionally 2000 kgf/cm² to 4000 kgf/cm²;
(7) the puncture strength of the separator is ≥ 60 gf, optionally 120 gf to 420 gf;
(8) the porosity of the separator is 30% to 90%, optionally 30% to 50%; and
(9) the air permeability of the separator is less than or equal to 300 sec/100 cc, optionally 100 sec/100 cc to 300 sec/100 cc.

In some embodiments, the pore-closing temperature of the separator is 120 °C to 170 °C, optionally 120 °C to 130 °C; the pore-closing time of the separator is less than or equal to 10 s, optionally 5 s to 10 s. For example, the pore-closing temperature of the separator may be 120 °C, 124 °C, 130 °C, 132 °C, 140 °C, 146 °C, 150 °C, 158 °C, 163 °C, 170 °C, etc., or fall within a range formed by any two of the above values, such as 120 °C to 130 °C, 124 °C to 140 °C, 140 °C to 150 °C, 146 °C to 158 °C, or 150 °C to 170 °C. The pore-closing time of the separator may be 3 s, 4 s, 5 s, 6 s, 7 s, 8 s, 9 s, 10 s, etc., or fall within a range formed by any two of the above values, such as 3 s to 5 s, 4 s to 7 s, 5 s to 8 s, or 7 s to 10 s. If the pore-closing temperature of the separator is too high or the pore-closing time is too long, it indicates that the filler phase in the separator requires reaching a certain temperature and maintaining the temperature for a certain time before the pores of the separator can be closed in a timely manner. If the pore-closing temperature of the separator is too low or the pore-closing time is too short, the filler phase in the separator will close the pores immediately at a relatively low temperature. When the pore-closing temperature and pore-closing time of the separator are within the above ranges, thermal shutdown can be achieved by quickly responding to thermal abnormalities, thereby improving the reliability of the secondary battery.

The transverse direction tensile strength (MD), machine direction tensile strength (TD), transverse direction elongation at break, and machine direction elongation at break of the separator all have meanings well understood in the art and can be measured using methods known in the art. For example, all the tests may be performed with reference to standard GB/T 36363-2018.

The puncture strength of the separator has a meaning well known in the art and can be tested using equipment and methods known in the art. For example, the puncture strength can be tested according to the standard GB/T 10004-2008. Specifically, the sample to be tested may be cut into strip-shaped pieces, the width of the strip-shaped sample being 100 mm. A test piece with a width of 100 mm is mounted on a sample film fixing clamp ring, then a steel needle with a diameter of 1.0 mm and a radius of the tip of the diameter of 0.5 mm is used for thrusting the test piece at a speed of (50±5) mm/min, and the maximum load of the steel needle penetrating the test piece is read. Typically, five parallel test samples are measured simultaneously, and three points are tested on each sample. The arithmetic mean value is taken as the final puncture strength.

According to some embodiments, porosity has a meaning well known in the art and can be tested using known equipment and methods. For example, the test may be performed with reference to GB/T 24586-2009. The testing method is as follows: The separator or substrate is punched into small circular samples with a diameter of 14 mm, and the thickness of the sample is measured. The apparent volume V1 of the separator or substrate is then calculated according to the formula for the volume of a cylinder. Referring to GB/T 24586-2009, an inert gas such as helium or nitrogen is used as the medium, and the true volume V2 of the separator or substrate is measured using a gas displacement method with a true density analyzer. Then, the porosity of the separator or substrate = (V1-V2)/V1 × 100%. The testing instrument may be the AccuPyc II 1340 Automatic True Density Analyzer from Micromeritics, USA.

According to some embodiments, the air permeability of the separator may be tested using equipment and methods known in the art. For example, the air permeability of the separator may be measured using the ASTM (Standard Test Method for Resistance of Nonporous Paper to Passage of Air). Porosity can be tested using equipment and methods known in the art.

The separator satisfies at least one of the above conditions (1) to (7), which can effectively improve the ductility of the separator and enhance the puncture resistance of the separator, thereby further improving the reliability of secondary batteries.

The second technical solution adopted in the present application is as follows: A method for preparing the separator as described above is provided. The preparation method includes the following steps:

S100: The raw material for forming the matrix phase, the raw material for forming the filler phase, and the nucleating agent were mixed to form a precursor, where the crystallization temperature of the raw material for forming the filler phase is lower than that of the raw material for forming the matrix phase.

The raw material for forming the matrix phase includes at least one of polypropylene, polytetrafluoroethylene, polyvinylidene fluoride, polyethylene terephthalate, polyetheretherketone, polyurethane, and polyester. The raw material for forming the filler phase includes at least one of polyethylene and polypropylene. For example, in some embodiments, the material of the matrix phase includes polypropylene, and the material of the filler phase includes polyethylene.

The nucleating agent may include an α-crystal form nucleating agent. There are no particular restrictions on the α-crystal form nucleating agent. Various well-known α-crystal form nucleating agents can be used, and one or a combination of two or more types of α-crystal form nucleating agents may be used.

The α-crystal form nucleating agent includes an inorganic α-crystal form nucleating agent and an organic α-crystal form nucleating agent.

An inorganic α-crystal form nucleating agent mainly includes talc, calcium oxide, carbon black, calcium carbonate, mica, inorganic pigments, kaolin, and catalyst residues, among others.

The organic α-crystal form nucleating agent may include at least one of an aromatic acid metal salt α-nucleating agent, a sorbitol-based α-nucleating agent, a rosin-based α-nucleating agent, and an organic phosphate α-nucleating agent.

The aromatic acid metal salt α-nucleating agent may include at least one of sodium benzoate, aluminum benzoate, and aluminum p-tert-butylbenzoate, which are metal salts of aromatic carboxylic acids. The sorbitol-based α-nucleating agent may include at least one of dibenzylidene sorbitol, substituted dibenzylidene sorbitol, 1,3:2,4-di-p-methylbenzylidene sorbitol, and di-(3,4-dimethylbenzylidene) sorbitol. The rosin-based α-nucleating agent may include at least one of dehydroabietic acid, a rosinate, a mixture of rosin acid and a salt thereof, and rosin amide. The organic phosphate α-nucleating agent may include at least one of an organic phosphate ester, an organic phosphate basic metal salt, and a compound.

The nucleating agent may include a β-crystal form nucleating agent. There are no particular restrictions on the β-crystal form nucleating agent. Various well-known β-crystal form nucleating agents can be used, and one or a combination of two or more types of β-crystal form nucleating agents may be used.

The β-crystal form nucleating agent includes an inorganic oxide β-nucleating agent, an inorganic salt β-nucleating agent, a condensed aromatic hydrocarbon β-nucleating agent, an organic carboxylic acid and salt β-nucleating agent thereof, an aromatic amide β-nucleating agent, and a rare earth β-nucleating agent, among others.

The inorganic oxide β-nucleating agent may include at least one of an oxide of Group IIA metals in the periodic table of elements and aluminum oxide. The inorganic salt β-nucleating agent may include at least one of calcium silicate, calcium carbonate, and calcium sulfate. The condensed aromatic hydrocarbon β-nucleating agent may include at least one of quinacridonequinone, triphenylenedithiazine, and bisazo yellow. The organic carboxylic acid β-nucleating agent may include at least one of adipic acid dibenzoyl hydrazide and suberic acid. The organic carboxylic acid salt β-nucleating agent may include at least one of calcium tetrahydrophthalate, calcium suberate, calcium pimelate, polycarboxylic acid calcium salts, and polycarboxylic acid zinc salts. The aromatic amide β-nucleating agent may include at least one of 2,6-cyclohexanedicarboxamide, 2,6-naphthalenedicarboxamide, and aryl dicarboxamide. The rare earth β-nucleating agent may include at least one of a rare earth lanthanide mononuclear metal compound, a rare earth multinuclear complex, and a binuclear complex formed by rare earth and a Group IIA metal.

The nucleating agent is used to generate the crystal form of the matrix phase. The higher the crystallization temperature, the easier it is to crystallize first. The raw material for forming the filler phase has a crystallization temperature lower than that of the raw material for forming the matrix phase, allowing the filler phase to crystallize before the matrix phase.

S200: The precursor is extruded to form a first intermediate product.

S300: The first intermediate product is subjected to a film casting treatment to form a second intermediate product.

The film casting treatment includes a first temperature stage and a second temperature stage, where the film casting temperature in the first temperature stage is higher than that in the second temperature stage.

S400: The second intermediate product is subjected to a stretching treatment.

In the technical solution of the embodiments of the present application, the raw material for forming the matrix phase, the raw material for forming the filler phase, and the nucleating agent are mixed, where the crystallization temperature of the raw material for the filler phase is lower than that of the raw material for forming the matrix phase. In a conventional film casting treatment, using a single temperature for treatment will result in the formation of homogeneous crystals, thereby exhibiting only one melting peak. However, in the film casting treatment according to the embodiments of the present application, a film casting process is employed where the film casting temperature in the first temperature stage is higher than that in the second temperature stage. This allows the raw material of the matrix phase to crystallize first, followed by the crystallization of the raw material of the filler phase, with the filler phase being dispersed in the matrix phase, thereby exhibiting two melting peaks. Subsequent stretching treatment forms a porous separator. In the separator, the temperature of the melting peak of the matrix phase is higher than that of the filler phase, and the matrix phase exhibits better thermal stability compared to the filler phase. Therefore, when the internal temperature of the secondary battery is relatively high, the filler phase melts first due to poorer thermal stability. This then closes the pores of the separator in a timely manner, thereby stopping the electrochemical reaction and preventing the internal temperature of the secondary battery from continuing to rise. As a result, the reliability of the secondary battery is improved.

In some embodiments, the melt index of the filler phase raw material is greater than that of the matrix phase raw material, with a ratio of the two ranging from 1.1 to 10.1, optionally 1.1 to 2.1. For example, the ratio of the melt index of the filler phase raw material to the melt index of the matrix phase raw material may be 1.1, 1.3, 1.4, 1.5, 1.6, 1.7, 1.8, 1.9, 2.0, 2.1, etc., or fall within a range formed by any two of the above values, such as 1.1 to 1.5, 1.4 to 1.6, 1.5 to 1.8, 1.7 to 2.0, or 1.9 to 2.1. The melt index is a numerical value indicating the flowability of plastic materials during processing. It was established by the American Society for Testing and Materials (ASTM) based on the method commonly used by DuPont Company (USA) to identify plastic properties. The testing method is as follows: First, the plastic granules are melted into a plastic fluid. Then, under specific conditions of time (10 minutes), temperature, and pressure (which vary depending on the material standards), the amount in grams (g) of the plastic fluid that flows out through a tube with a diameter of 2.1 mm is measured. A higher value indicates better processing flowability of the plastic material, whereas a lower value indicates poorer flowability. The melt index of the filler phase raw material is greater than that of the matrix phase raw material, and the ratio between the two is restricted to the above ranges. The matrix phase exhibits better thermal stability compared to the filler phase. When the internal temperature of the secondary battery is relatively high, the filler phase melts first, thereby closing the pores of the separator in a timely manner, terminating the electrochemical reaction, and preventing the internal temperature of the secondary battery from continuing to rise. As a result, the reliability of the secondary battery is improved.

In some embodiments, the crystallization temperature of the filler phase raw material is 80 °C to 120 °C, optionally 80 °C to 100 °C; the crystallization temperature of the matrix phase raw material is 125 °C to 135 °C, optionally 125 °C to 130 °C. By limiting the crystallization temperature of the filler phase raw material and the crystallization temperature of the matrix phase raw material within the above ranges, the temperature of the melting peak of the matrix phase is ensured to be higher than that of the filler phase. When the internal temperature of the secondary battery is relatively high, the filler phase melts first, closing the pores of the separator in a timely manner, terminating the electrochemical reaction, and preventing the internal temperature of the secondary battery from continuing to rise. As a result, the reliability of the secondary battery is improved.

In some embodiments, the film casting temperature in the first temperature stage is 125 °C to 135 °C, optionally 125 °C to 130 °C; the film casting temperature during the second temperature stage is 105 °C to 125 °C, optionally 105 °C to 110 °C. Optionally, the difference between the film casting temperature in the first temperature stage and the film casting temperature in the second temperature stage is 10 °C to 20 °C. For example, in some embodiments, the film casting temperature in the first temperature stage may be 125 °C, 126 °C, 128 °C, 130 °C, 131 °C, 133 °C, or 135 °C, or fall within a range formed by any of the above values, such as 125 °C to 126 °C, 126 °C to 130 °C, 130 °C to 133 °C, or 133 °C to 135 °C. In some embodiments, the film casting temperature during the second temperature stage may be 105 °C, 108 °C, 110 °C, 115 °C, 118 °C, 120 °C, 122 °C, or 125 °C, or fall within a range formed by any of the above values, such as 105 °C to 110 °C, 108 °C to 115 °C, 115 °C to 120 °C, or 120 °C to 125 °C. In some embodiments, the difference between the film casting temperature in the first temperature stage and the film casting temperature in the second temperature stage may be 10 °C, 12 °C, 14 °C, 16 °C, 18 °C, or 20 °C, or fall within a range formed by any of the above values, such as 10 °C to 12 °C, 12 °C to 16 °C, or 16 °C to 20 °C. The filler phase has a higher crystallization temperature. In the first temperature stage, crystallization and phase separation occur preferentially from the matrix phase. In the second temperature stage, the crystallization rate of the matrix phase is maximized, allowing for complete crystallization. By limiting the film casting temperature to the above ranges, the separator can fully crystallize, forming a filler phase and a matrix phase.

In some embodiments, during the step of subjecting the second intermediate product to a stretching treatment, the transverse direction stretching temperature is 110 °C to 120 °C, optionally 110 °C to 115 °C; the machine direction stretching temperature is 85 °C to 120 °C, optionally 110 °C to 120 °C. For example, in some embodiments, the transverse direction stretching temperature may be 110 °C, 112 °C, 114 °C, 115 °C, 116 °C, 118 °C, or 120 °C, or fall within a range formed by any of the above values, such as 110 °C to 114 °C, 112 °C to 115 °C, 115 °C to 118 °C, or 116 °C to 120 °C. In some embodiments, the machine direction stretching temperature may be 85 °C, 90 °C, 95 °C, 100 °C, 104 °C, 110 °C, 115 °C, or 120 °C, or fall within a range formed by any of the above values, such as 85 °C to 90 °C, 90 °C to 104 °C, 100 °C to 115 °C, or 115 °C to 120 °C. During the step of subjecting the second intermediate product to a stretching treatment, by limiting the transverse direction stretching temperature and the machine direction stretching temperature within the above ranges, the resulting separator can exhibit improved performance.

### [Positive Electrode Plate]

In a secondary battery, the positive electrode plate generally includes a positive electrode current collector and a positive electrode film layer disposed on the positive electrode current collector, and the positive electrode film layer includes a positive electrode active material.

The positive electrode current collector may be made of a conventional metal foil or be a composite current collector (a metal material may be disposed on a polymer substrate to form a composite current collector). As an example, the positive electrode current collector may be made of aluminum foil.

The specific type of the positive electrode active material is not limited and may include active materials known in the art that can be used for the positive electrodes of secondary batteries. Those skilled in the art can select them according to actual needs.

As an example, the positive electrode active material may include, but is not limited to, one or more of lithium transition metal oxides, lithium-containing phosphates with an olivine structure, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the lithium-containing phosphate with an olivine structure may include, but are not limited to, one or more of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and modified compounds thereof. These materials are all commercially available.

The modified compounds of the materials described above may be in the form of doping modification and/or surface-coating modification of the materials.

Typically, the positive electrode film layer further optionally includes a binder, a conductive agent, and other optional auxiliary agents.

As an example, the conductive agent may be one or more of superconducting carbon, acetylene black, carbon black, Ketjen black, carbon dots, carbon nanotubes, conductive carbon black (Super P, SP), graphene, and carbon nanofibers.

As an example, the binder may be one or more of polymerized styrene butadiene rubber (SBR), water-based acrylic resin, polyvinylidene difluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative Electrode Plate]

In a secondary battery, the negative electrode plate generally includes a negative electrode current collector and a negative electrode film layer disposed on the negative electrode current collector, and the negative electrode film layer includes a negative electrode active material.

The negative electrode current collector may be made of conventional metal foil or be a composite current collector (for example, a metal material may be disposed on a polymer substrate to form a composite current collector). As an example, the negative electrode current collector may be made of copper foil.

The specific type of the negative electrode active material is not limited and may include active materials known in the art that can be used for the negative electrodes of secondary batteries. Those skilled in the art can select them according to actual needs. As an example, the negative electrode active material may include, but is not limited to, one or more of artificial graphite, natural graphite, hard carbon, soft carbon, silicon-based material, and tin-based material. The silicon-based material may be selected from one or more of elemental silicon, a silicon-oxygen compound (such as silicon monoxide), a silicon-carbon composite, a silicon-nitrogen composite, and a silicon alloy. The tin-based material may be selected from one or more of elemental tin, a tin-oxygen compound, and a tin alloy. These materials are all commercially available.

In some embodiments, to further improve the energy density of the battery, the negative electrode active material may include a silicon-based material.

Typically, the negative electrode film layer further optionally includes a binder, a conductive agent, and other optional auxiliary agents.

As an example, the conductive agent may be one or more of superconducting carbon, acetylene black, carbon black, Ketjen black, a carbon dot, a carbon nanotube, graphene, and a carbon nanofiber.

As an example, the binder may be one or more of polymerized styrene butadiene rubber (SBR), water-based acrylic resin, polyvinylidene difluoride (PVDF), polytetrafluoroethylene (PTFE), ethylene-vinyl acetate copolymer (EVA), polyvinyl alcohol (PVA), and polyvinyl butyral (PVB).

As an example, other optional auxiliary agents may be thickeners, dispersants (such as Carboxymethylcellulose Sodium, CMC-Na), or PTC thermistor materials.

### [Electrolytic Solution]

The secondary battery may include an electrolytic solution, which functions to conduct ions between the positive electrode and the negative electrode. The electrolytic solution may include electrolyte salts and a solvent.

As an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

As an example, the solvent may be selected from one or more of ethylene carbonate (EC), propylene carbonate (PC), methyl ethyl carbonate (EMC), diethyl carbonate (DEC), dimethyl carbonate (DMC), dipropyl carbonate (DPC), methyl propyl carbonate (MPC), diisopropyl carbonate (EPC), butylene carbonate (BC), fluoroethylene carbonate (FEC), methyl formate (MF), methyl acetate (MA), ethyl acetate (EA), n-propyl acetate (PA), methyl propionate (MP), ethyl propanoate (EP), n-propyl propionate (PP), methyl butyrate (MB), ethyl butyrate (EB), 1,4-butyrolactone (GBL), tetramethylene sulfone (SF), methyl sulfone (MSM), methyl ethyl sulfone (EMS), and diethyl sulfone (ESE).

In some embodiments, the electrolytic solution further includes an additive. For example, the additive may include a negative-electrode film-forming additive, or may include a positive-electrode film-forming additive, or may include an additive capable of improving certain properties of the battery, such as an additive for improving the overcharge performance of the battery, an additive for improving the high-temperature performance of the battery, and an additive for improving the low-temperature performance of the battery.

In some embodiments, the secondary battery may be a lithium-ion secondary battery. When the porous coating layer 13 is located between a first porous base film 11 and a first porous base film 12, the binder 14 not only serves to bond the first porous base film 11 and the first porous base film 12, but also ensures that at least part of the filler particles 15 are embedded in the first porous base film 11 and/or the second porous base film 12 to a depth greater than or equal to 1 µm. This enhances the bonding strength between the porous coating layer 13 and the first porous base film 11 as well as the first porous base film 12, thereby improving the reliability of the secondary battery.

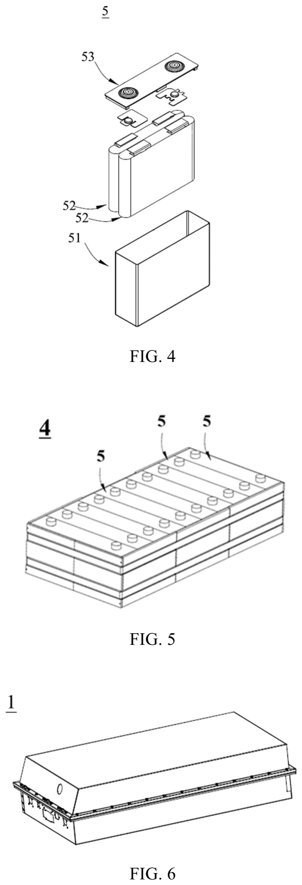

The embodiments of the present application do not particularly limit the shape of the secondary battery, and it may have a cylindrical shape, a prismatic shape, or any other shape. FIG. 4 shows a secondary battery 5 having a square structure as one example.

In some embodiments, the secondary battery may include an outer packaging. The outer packaging is used for packaging the positive electrode plate, negative electrode plate, and electrolyte.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic and may include one or more of polypropylene (PP), polybutylene terephthalate (PBT), or polybutylene succinate (PBS).

In some embodiments, referring to FIG. 5, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity.

Methods for preparing a secondary battery in the present application are well known. In some embodiments, a positive electrode plate, a separator 10, a negative electrode plate, and an electrolytic solution may be assembled to form a secondary battery. As an example, the positive electrode plate, the separator 10, and the negative electrode plate may form an electrode assembly through a winding process and/or a stacking process. The electrode assembly is placed in an outer packaging, dried, and then injected with an electrolytic solution. After undergoing processes such as vacuum packaging, standing, formation, and shaping, a battery cell is obtained. A plurality of battery cells may further form a battery module through a series connection, parallel connection, or a combination of both. A plurality of battery modules may also form a battery pack through a series connection, parallel connection, or a combination of both. In some embodiments, a plurality of battery cells may also directly form a battery pack.

FIG. 6 shows a battery module 4 as one example. Referring to FIG. 6, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

The battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

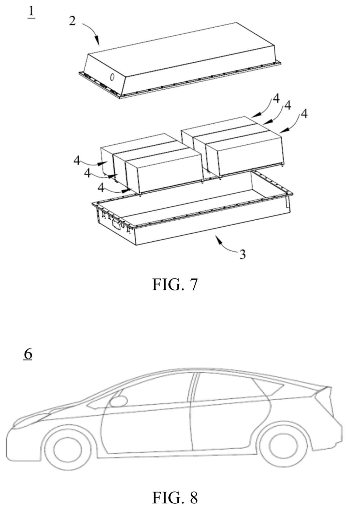

FIGS. 7 and 8 show a battery pack 1 as one example. Referring to FIGS. 7 and 8, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

### [Device]

The present application further provides an electric device. The electric device includes the secondary battery according to the present application. Battery cells, battery modules, or battery packs can serve as the power source for a device, or as the energy storage unit for a device. The device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, a satellite, or an energy storage system.

A battery cell, a battery module, or a battery pack may be selected based on the use requirements of the device.

FIG. 7 shows an electric device 6 as one example. The electric device 6 may be a pure electric vehicle, a hybrid electric vehicle, a plug-in hybrid electric vehicle, or the like. To meet the requirements of the electric device 6 for high power and high energy density of the secondary battery, the battery pack or the battery module may be used.

As another example, the electric device 6 may be a mobile phone, a tablet computer, a notebook computer, or the like. The electric device is generally required to be light and thin, and a battery cell can thus be used as the power source.

The following provides a further explanation of the advantageous effects of the present application with reference to the embodiments.

In order to make the technical problems solved by the embodiments of the present application, the technical solutions, and the advantageous effects clearer, the following will provide a more detailed explanation with reference to the embodiments and the drawings. Apparently, the described embodiments are merely some embodiments of the present application, rather than all of the embodiments. The following description of at least one exemplary embodiment is merely illustrative and is in no way intended to limit the present application and the application thereof. Based on the embodiments in the present application, all other embodiments obtained by those of ordinary skills in the art without creative work shall fall within the protection scope of the present application.

### I. Preparation of Separator

### Example 1

A polyethylene raw material with a crystallization temperature of 127 °C and a polypropylene raw material with a crystallization temperature of 114 °C were provided. Calcium carbonate is used as the nucleating agent, which is mixed to form a precursor. After extrusion molding of the precursor, a film casting treatment was performed, where the temperature value for the first temperature stage is 135 °C, and the temperature value for the second temperature stage is 120 °C, followed by stretching treatment.

Examples 2 to 16 and Comparative Examples 1 to 2 follow similar preparation processes. The differences lie in adjustments to the raw material composition, nucleating agent, and film casting. Please refer to Table 1.

### II. Performance Testing of the Separator, please refer to Table 2.

(1) Pore-Closing Temperature
   1. Sample Preparation: The separator sample was cut into a shape of 50 mm * 100 mm, with at least 20 pieces per group.
   2. Testing: The sample was placed in an oven, gradually heated from room temperature to 110 °C, and then taken out for air permeability testing. Air permeability testing was conducted for every 1 °C increase in temperature. The curve of air permeability change with temperature was recorded, and the temperature point at which the air permeability drastically changes is recorded as the pore-closing temperature.
(2) Pore-Closing Time
   1. Sample Preparation: The separator sample was cut into a shape of 50 mm * 100 mm, with at least 20 pieces per group.
   2. Testing: The sample was placed in an oven, gradually heated from room temperature to the pore-closing temperature, and then taken out at regular intervals to conduct air permeability testing. The curve of air permeability change with time was recorded, and the time point at which the air permeability drastically changes is recorded as the pore-closing time.

**Table 1: Preparation Parameters of Separators in Various Examples and Comparative Examples**

| No. | Raw Material 1 | | Raw Material 2 | | Nucleating Agent Content (as a percentage of the total mass of raw material 1 and raw material 2) | Temperature Value for First Temperature Stage | Temperature Value for Second Temperature Stage |
|---|---|---|---|---|---|---|---|
| | Composition | Crystallization temperature (°C) | Composition | Crystallization temperature (°C) | | | |
| Example 1 | PP | 127 | PE | 114 | 0.3% | 135 | 120 |
| Example 2 | PP | 127 | PE | 114 | 1.5% | 135 | 110 |
| Example 3 | PP | 127 | PE | 114 | 0.6% | 127 | 105 |
| Example 4 | PP | 127 | PE | 114 | 0.6% | 135 | 110 |
| Example 5 | PP | 127 | PE | 114 | 0.6% | 127 | 120 |
| Example 6 | PP | 127 | PE | 114 | 0.6% | 127 | 110 |
| Example 7 | PP | 127 | PE | 114 | 0.8% | 127 | 110 |
| Example 8 | PP | 127 | PE | 114 | 1.0% | 127 | 110 |
| Example 9 | PP | 127 | PE | 114 | 1.2% | 127 | 110 |
| Example 10 | PTFE | / | PE | 114 | 0.6% | 127 | 110 |
| Example 11 | PTFE | / | PP | 127 | 0.6% | 127 | 110 |
| Example 12 | PP | 127 | PE | 114 | 0.6% | 127 | 110 |
| Example 13 | PTFE | / | PE | 114 | 0.6% | 127 | 110 |
| Example 14 | PTFE | / | PP | 127 | 0.6% | 127 | 110 |
| Example 15 | PET | 135 | PP | 127 | 0.6% | 127 | 110 |
| Example 16 | PET | 135 | PE | 114 | 0.6% | 127 | 110 |
| Comparative Example 1 | PP | 127 | PE | 114 | 0.6% | / | / |
| Comparative Example 2 | PP | 127 | PE | 114 | 0.6% | 120 | / |

**Table 2: Test Results of Separator Performance in Various Examples and Comparative Examples**

| No. | Matrix Phase Composition | Dispersed Phase Composition | Structural Relationship | Presence of Two Melting Peaks in Differential Scanning Calorimeter Test Curve | Ratio of Matrix Phase Melting Peak Area to Filler Phase Melting Peak Area | Presence of Diffraction Peaks in 15° < 2θ < 17° | Presence of Diffraction Peaks in 23° < 2θ < 25° | Intensity of Diffraction Peaks in 15° < 2θ < 17° Greater than in 23° < 2θ < 25° | Pore-Closing Temperature (°C) | Pore-Closing Time (s) |
|---|---|---|---|---|---|---|---|---|---|---|
| Example 1 | PP | PE | Filler phase distributed in matrix phase | Yes | 0.8 | Yes | Yes | Yes | 100 | 10 |
| Example 2 | PP | PE | Filler phase distributed in matrix phase | Yes | 1 | Yes | Yes | Yes | 110 | 8.5 |
| Example 3 | PP | PE | Filler phase distributed in matrix phase | Yes | 1.5 | Yes | Yes | Yes | 127 | 6.2 |
| Example 4 | PP | PE | Filler phase distributed in matrix phase | Yes | 1.1 | Yes | Yes | Yes | 120 | 6.7 |
| Example 5 | PP | PE | Filler phase distributed in matrix phase | Yes | 1.2 | Yes | Yes | Yes | 123 | 6.5 |
| Example 6 | PP | PE | Filler phase distributed in matrix phase | Yes | 1.3 | Yes | Yes | Yes | 125 | 6.3 |
| Example 7 | PP | PE | Filler phase distributed in matrix phase | Yes | 1.8 | Yes | Yes | Yes | 132 | 5.2 |
| Example 8 | PP | PE | Filler phase distributed in matrix phase | Yes | 2 | Yes | Yes | Yes | 135 | 4.9 |
| Example 9 | PP | PE | Filler phase distributed in matrix phase | Yes | 2.3 | Yes | Yes | Yes | 136 | 6.7 |
| Example 10 | PTFE | PE | Filler phase distributed in matrix phase | Yes | 1.3 | No | Yes | / | 125 | 9.7 |
| Example 11 | PTFE | PP | Filler phase distributed in matrix phase | Yes | 1.3 | No | No | / | 165 | 9.2 |
| Example 12 | PP | PE | Filler phase distributed in matrix phase | Yes | 1.3 | Yes | Yes | No | 125 | 7.4 |
| Example 13 | PTFE | PE | Filler phase distributed in matrix phase | Yes | 1.5 | Yes | Yes | Yes | 127 | 8 |
| Example 14 | PTFE | PP | Filler phase distributed in matrix phase | Yes | 1.5 | Yes | Yes | Yes | 166 | 7.6 |
| Example 15 | PET | PP | Filler phase distributed in matrix phase | Yes | 1.5 | Yes | Yes | Yes | 127 | 8.1 |
| Example 16 | PET | PE | Filler phase distributed in matrix phase | Yes | 1.5 | Yes | Yes | Yes | 166 | 7.7 |
| Comparative Example 1 | PP/PE/PP three-layer composite film | | | Yes | / | Yes | Yes | Yes | 120 | 30 |
| Comparative Example 2 | PP | PE | Filler phase distributed in matrix phase | No | / | / | / | / | 150 | 45 |

From Table 1, it can be seen that Examples 1 to 16, compared to Comparative Examples 1 to 2, satisfy the requirement that the porous base film includes a matrix phase and a filler phase distributed in the matrix phase. In the differential scanning calorimeter test curve of the porous base film, both the melting peak of the matrix phase and the melting peak of the filler phase are included, with the temperature of the melting peak of the matrix phase being higher than that of the filler phase. Therefore, the performance data of Examples 1 to 16 are superior to those of Comparative Examples 1 to 2.

Comparing Examples 1 to 2 with Examples 3 to 9, it is indicated that when the ratio of the peak area of the melting peak of the matrix phase to the peak area of the melting peak of the filler phase is greater than 1, the performance data of Examples 3 to 9 are superior to those of Examples 1 to 2.

Comparing Examples 1 to 4 and 9 with Examples 5 to 8, it is indicated that when the ratio of the peak area of the melting peak of the matrix phase to the peak area of the melting peak of the filler phase is in the range of 1.2 to 2.0, the performance data of Examples 1 to 4 and 9 are superior to those of Examples 5 to 8.

Comparing Examples 6, 7, and 12 with Examples 10 and 11, it is indicated that when the porous base film exhibits diffraction peaks in the range of 15° < 2θ < 17°, the performance data of Examples 6, 7, and 12 are superior to those of Examples 10 and 11.

Comparing Examples 6, 7, 10, and 12 with Example 11, it is indicated that when the porous base film exhibits diffraction peaks in the range of 23° < 2θ < 25°, the performance data of Examples 6, 7, 10, and 12 are superior to those of Example 11.

Comparing Examples 6 and 7 with Examples 10 to 12, it is indicated that the porous base film includes a first diffraction peak in the range of 15° < 2θ < 17° and a second diffraction peak in the range of 23° < 2θ < 25°. When the diffraction peak intensity of the first diffraction peak is greater than that of the second diffraction peak, the performance data of Examples 6 and 7 are superior to those of Examples 10 to 12.

In summary, the separator according to the embodiments of the present application includes a porous base film. The porous base film includes a matrix phase and a filler phase distributed in the matrix phase. In the differential scanning calorimeter test curves of the porous base film, both the melting peak of the matrix phase and the melting peak of the filler phase are included, with the temperature of the melting peak of the matrix phase higher than that of the filler phase. The temperature of the melting peak of the matrix phase is higher than that of the filler phase, that is, the matrix phase exhibits better thermal stability compared to the filler phase. Therefore, when the internal temperature of the secondary battery is relatively high, the filler phase melts first due to poorer thermal stability, thereby closing the pores of the separator in a timely manner, terminating the electrochemical reaction, and preventing the internal temperature of the secondary battery from continuing to rise. As a result, the reliability of the secondary battery is improved.

The above descriptions are merely embodiments of the present application and do not thereby limit the patent scope of the present application. Any equivalent structures or equivalent process changes made based on the content of the specification and drawings of the present application, or any direct or indirect application in other related technical fields, shall likewise be included within the scope of patent protection of the present application.

## Claims

1. A separator, comprising a porous base film, wherein the porous base film comprises a matrix phase and a filler phase distributed in the matrix phase; in a differential scanning calorimeter test curve of the porous base film, both a melting peak of the matrix phase and a melting peak of the filler phase are included, and a temperature of the melting peak of the matrix phase is higher than a temperature of the melting peak of the filler phase.

2. The separator according to claim 1, wherein a ratio of a peak area of the melting peak of the matrix phase to a peak area of the melting peak of the filler phase is greater than 1, optionally 1.2 to 2.0.

3. The separator according to claim 1 or 2, wherein in an X-ray diffraction pattern of the porous base film, the porous base film exhibits a diffraction peak within a range of 15° < 2θ < 17°.

4. The separator according to any one of claims 1 to 3, wherein in the X-ray diffraction pattern of the porous base film, the porous base film exhibits a diffraction peak within a range of 23° < 2θ < 25°.

5. The separator according to any one of claims 1 to 4, wherein in the X-ray diffraction pattern of the porous base film, the porous base film comprises a first diffraction peak within the range of 15° < 2θ < 17° and a second diffraction peak within the range of 23° < 2θ < 25°, and a diffraction peak intensity of the first diffraction peak is greater than a diffraction peak intensity of the second diffraction peak.

6. The separator according to any one of claims 1 to 5, wherein:
the filler phase comprises α-crystal form grains; and/or
the matrix phase comprises β-crystal form grains.

7. The separator according to any one of claims 1 to 6, wherein a grain size of the filler phase is 0.1 µm to 2 µm, optionally 0.1 µm to 0.5 µm.

8. The separator according to any one of claims 1 to 7, wherein a mass fraction of the filler phase in a substrate is 10% to 40%, optionally 15% to 25%.

9. The separator according to any one of claims 1 to 8, wherein:
a relative molecular mass of a material of the filler phase is less than or equal to 1,200,000, optionally 400,000 to 600,000; and/or
a relative molecular mass of a material of the matrix phase is greater than or equal to 300,000, optionally 300,000 to 2,500,000.

10. The separator according to any one of claims 1 to 9, wherein the temperature of the melting peak of the matrix phase is 160 °C to 350 °C, optionally 160 °C to 180 °C; and/or
the temperature of the melting peak of the filler phase is 60 °C to 180 °C, optionally 80 °C to 130 °C.

11. The separator according to any one of claims 1 to 10, wherein:
the material of the matrix phase comprises at least one of polypropylene, polytetrafluoroethylene, polyvinylidene fluoride, polyethylene terephthalate, polyetheretherketone, polyurethane, and polyester; and/or
the material of the filler phase comprises at least one of polyethylene and polypropylene.

12. The separator according to any one of claims 1 to 11, wherein a pore size of the porous base film is less than or equal to 0.5 µm, optionally 0.02 µm to 0.1 µm.

13. The separator according to any one of claims 1 to 12, wherein the separator satisfies at least one of the following (1) to (9):
(1) a pore-closing temperature of the separator is 120 °C to 170 °C, optionally 120 °C to 130 °C;
(2) a pore-closing time of the separator is less than or equal to 10 s, optionally 5 s to 10 s;
(3) a transverse direction elongation at break of the separator is ≥ 100%, optionally 100% to 120%;
(4) a machine direction elongation at break of the separator is ≥ 60%, optionally 60% to 80%;
(5) a transverse direction tensile strength of the separator is ≥ 1500 kgf/cm², optionally 2000 kgf/cm² to 4000 kgf/cm²;
(6) a machine direction tensile strength of the separator is ≥ 2000 kgf/cm², optionally 2000 kgf/cm² to 4000 kgf/cm²;
(7) a puncture strength of the separator is ≥ 60 gf, optionally 120 gf to 420 gf;
(8) a porosity of the separator is 30% to 90%, optionally 30% to 50%; and
(9) an air permeability of the separator is less than or equal to 300 sec/100 cc, optionally 100 sec/100 cc to 300 sec/100 cc.

14. A method for preparing the separator according to any one of claims 1 to 13, comprising:
mixing a raw material for forming a matrix phase, a raw material for forming a filler phase, and a nucleating agent to form a precursor, wherein a crystallization temperature of the raw material for forming the filler phase is lower than a crystallization temperature of the raw material for forming the matrix phase;
extruding the precursor to form a first intermediate product;
subjecting the first intermediate product to a film casting treatment to form a second intermediate product, wherein the film casting treatment comprises a first temperature stage and a second temperature stage, and a film casting temperature in the first temperature stage is higher than a film casting temperature in the second temperature stage; and
subjecting the second intermediate product to a stretching treatment to obtain a porous base film;
wherein the porous base film comprises a matrix phase and a filler phase distributed in the matrix phase; in a differential scanning calorimeter test curve of the porous base film, both a melting peak of the matrix phase and a melting peak of the filler phase are included, and a temperature of the melting peak of the matrix phase is higher than a temperature of the melting peak of the filler phase.

15. The method for preparing the separator according to claim 14, wherein a melt index of the raw material of the filler phase is greater than a melt index of the raw material of the matrix phase; optionally, a ratio of the melt index of the raw material of the filler phase to the melt index of the raw material of the matrix phase is 1.1 to 10.1, optionally 1.1 to 2.1.

16. The method for preparing the separator according to claim 14 or 15, wherein the crystallization temperature of the raw material of the filler phase is 80 °C to 120 °C, optionally 80 °C to 100 °C;
and/or the crystallization temperature of the raw material of the matrix phase is 125 °C to 135 °C, optionally 125 °C to 130 °C.

17. The method for preparing the separator according to any one of claims 14 to 16, wherein the film casting temperature in the first temperature stage is 125 °C to 135 °C, optionally 125 °C to 130 °C; and/or
the film casting temperature in the second temperature stage is 105 °C to 125 °C, optionally 105 °C to 110 °C; and/or
a difference between the film casting temperature in the first temperature stage and the film casting temperature in the second temperature stage is 10 °C to 20 °C.

18. The method for preparing the separator according to any one of claims 14 to 17, wherein, in the step of subjecting the second intermediate product to the stretching treatment, a transverse direction stretching temperature is 110 °C to 120 °C, optionally 110 °C to 115 °C; and/or a machine direction stretching temperature is 85 °C to 120 °C, optionally 110 °C to 120 °C.

19. A secondary battery, comprising the separator according to any one of claims 1 to 13 or a separator prepared by the method for preparing the separator according to any one of claims 14 to 18, wherein the secondary battery comprises a positive electrode plate and a negative electrode plate, and the separator is disposed between the positive electrode plate and the negative electrode plate.

20. An electric device, comprising the secondary battery according to claim 19.
